# EUROPEAN PATENT SPECIFICATION

(11) **EP 2 902 313 B1**
(45) Date of publication and mention of the grant of the patent: **10.05.2017**
(21) Application number: 15156088.5
(22) Date of filing: 21.12.2012
(51) Int. Cl.: B64C 1/14, B64C 3/34

(54) **Outer fuel tank access cover, wing and aircraft comprising such a cover**
Abdeckung für äußeren Kraftstofftankzugang, Flügel und Flugzeug mit einer solchen Abdeckung
Couvercle d'accès de réservoir de carburant externe, aile et avion comprenant un tel couvercle

(43) Date of publication of application: 05.08.2015
(62) Divisional of application: 12382523.4
(73) Proprietor: Airbus Operations, S.L., 28906 Getafe Madrid (ES)
(72) Inventor: Alazraki, Marcos, 28906 Getafe Madrid (ES); Sanz Torrijos, Jose, 28906 Getafe Madrid (ES)
(74) Representative: ABG Patentes, S.L.

(56) References cited:
- US-A- 4 530 443
- US-A1- 2009 166 473

## Description

### FIELD OF THE INVENTION

The present invention describes an outer fuel access tank cover (FTAC) of an aircraft, a wing comprising such outer FTAC of an aircraft and an aircraft. The invention belongs to the field of designing auxiliary pieces in the wings of aircraft to control the risk of impact against an inner FTAC when an impact occurs against the outer FTAC. This impact can be caused by a tire.

### BACKGROUND OF THE INVENTION

Manholes in an aircraft provide access to the fuel tank. Manholes comprise an inner fuel tank access cover (inner FTAC), an outer FTAC and a void area between the two covers. Fuel Tank Access Covers (FTACs) are mechanically fastened, with fasteners, such as bolts, and clamped against the aircraft wing skin to provide fuel tank access sealing. FTAC are designed to meet a wide array of requirements, some of them are: no fuel leaks, fire resistance, resistance to a tire impact, resistance to impacts resulting from an UERF (Uncontained Engine Rotor Failure), EMH/lightning strike, seal friction, and wing bending. The current design approach to address the resistance of the structure to an impact, for example, a tire impact, is to have heavy and stiff outer FTACs along with large diameter bolts to absorb the impact energy so that it is not transmitted to the inner FTAC and the sealing integrity of the structure is not compromised

The technical problem encountered in current solutions is that FTACs are too heavy. Another problem is the surrounding mounting structure is damaged which could create major repair issues.

Therefore, there is a need to find a solution for FTACs which
- decreases weight in an aircraft and which
- prevents the impact energy of an impact on the outer FTAC (4) to reach an inner FTAC (3) in an aircraft.
- prevent damage to the manhole mounting structure.

The mentioned prior art approach is seen in the patent US 4 291 816 A wherein a fluid tight closure for an aperture, adapted to form a fuel tank access door for an aircraft, and providing fail-safe features and resistance to lightning strikes is described

Other patent documents describing different solutions in aircrafts approaching absorption of impact energy and or designing FTAC and fuel tank access covers accomplishing the required characteristics taken into account in the state of the art are: EP 1 628 877 B1, US 5,316,167, US 2001/0010345, US 2007/0207421, US 2012/0217347, US 4,291,816 and US 4,530,443 A.

This latter document discloses an inner access panel having a molded nylon fiberglass reinforced base and having a high strength core spaced between a nylon base first face for extending into the tank and an outer second face for extending outwardly of the tank.

Document US 2009/0166473 A1 discloses an aircraft manhole which comprises a skin panel of the aircraft structure, an outer door and an inner door of the aircraft manhole being positioned on the mentioned skin panel.

### DESCRIPTION OF THE INVENTION

The present invention provides a solution for the aforementioned problems, by providing an outer FTAC according to claim 1, a wing of an aircraft according to claim 2 and an aircraft according to claim 3.

The absorption of the impact energy is particularly carried out by plastic deformation of the outer FTAC provided by the invention.

The present invention approaches the technical problems described by providing an outer FTAC that intends to improve its sealing performance after an impact and is lighter with respect to current designs.

Advantageously, this approach reduces the energy transferred to the inner FTAC cover and surrounding wing. The absorption of impact energy is achieved by converting the kinetic energy of the impacting fragment to work energy and heat by means of a plastic deformation of certain parts of the FTAC described.

The advantage of this solution over current designs is that the impact energy is mostly absorbed by the outer FTAC, thereby minimizing the damage to the support structure, which ensures that sealing performance around the outer FTAC is fulfilled.

A second aspect of the invention presents a *wing of an* aircraft comprising an outer FTAC according to the first aspect of the invention.

A last aspect of the invention presents an *aircraft comprising a wing according to the second aspect of the invention.*

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- **Figure 1A**: This figure represents an embodiment of an aircraft wherein the left wing is shown in black.
- **Figure 1B**: This figure shows the locations of the wing of the aircraft shown in figure 1A where the FTACs are located.
- **Figure 1C**: In this figure an embodiment of an outer FTAC according to the state of the art is represented.
- **Figure 1D**: In this figure a sectional view of the inner area of the wing wherein the fuel tank (1) is located is represented. Besides, the relative position of the FTACs to the fuel tank (1) is shown.
- **Figure 1E**: In this figure a zoomed view of figure 1D is represented where the inner FTAC (3) and outer FTAC (4) are joined by means of bolts (18) and the inner FTAC (3) is shown to be sealed to the wing skin (16) with fuel seals (17).
- **Figures 2A,**: **2B:** These figures represent two views of an outer FTAC not forming part of the invention where a frangible line (5) is visible on the inner surface (4.1) of an outer FTAC (4). In figure 2B a particular FTAC comprises a rip stop feature (8).
- **Figures 3A, 3B, 3C, 3D, 3E, 3F:**: Various frangible line (5, 7) patterns are shown in figures 3A, 3B, 3C, 3D, 3E, 3F.
- **Figure 4**: In this figure an embodiment of an outer FTAC is represented which comprises a foam core (9) between two layers (10, 11) of aluminium.
- **Figure 5**: In this figure a comparative graphic is shown, wherein different levels of energy absorbed per second having different absorption means are represented.

### DETAILED DESCRIPTION OF THE INVENTION

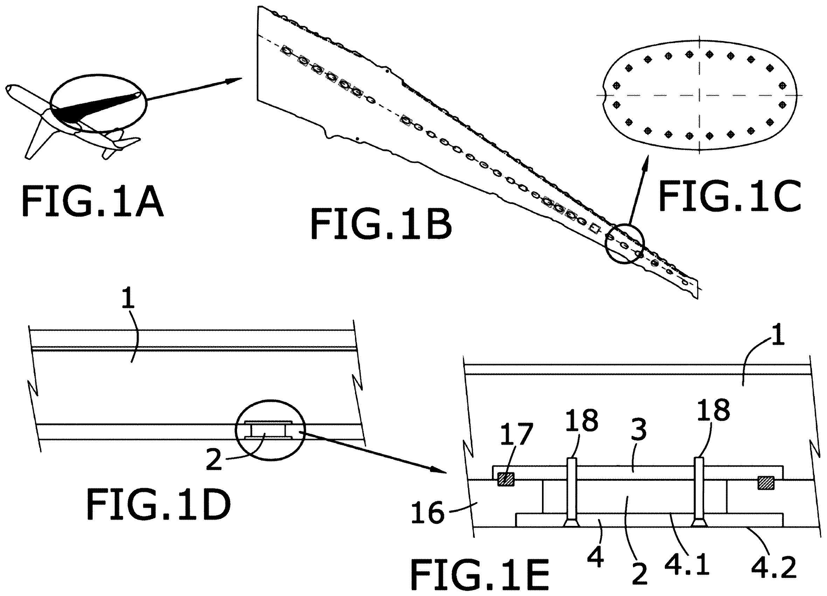

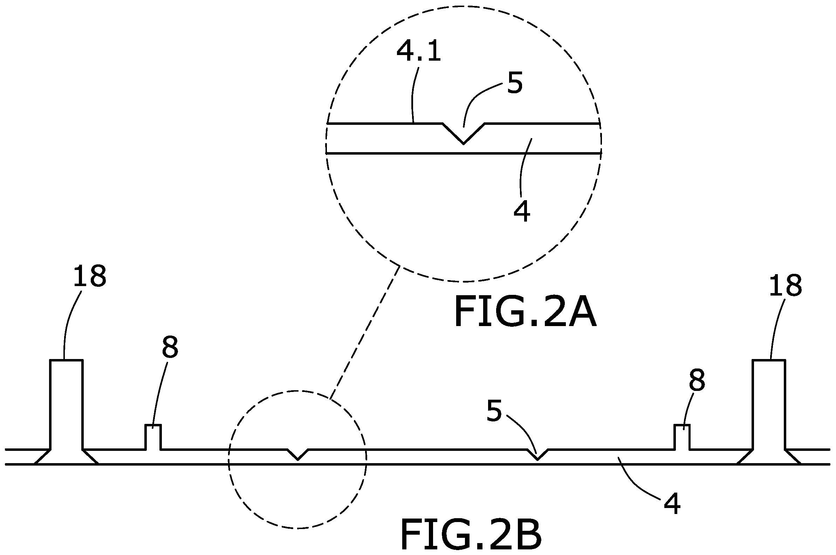

An embodiment of an aircraft is represented in figure 1A and its left wing is shown in figure 1B where the locations where the FTACs (fig. 1C) are located are shown. In figure 1D a sectional view of the inner area of the wing wherein the fuel tank (1) is located is represented. Besides, in figures 1D and 1E the relative position of the FTACs to the fuel tank (1) is shown. The inner FTAC (3) is in the fuel tank (1) and it is sealed with fuel seals (17) to the lower wing skin (16). The outer FTAC (4) is fixed to the lower wing skin (16) by means of a plurality of mounting holes peripherally distributed. The fixing means (18), or fasteners, in an embodiment of the invention, are bolts. An exemplary outer FTAC (4) comprises energy-absorption means which are at least one frangible line (5) located on the inner surface (4.1) of the outer FTAC (4) and calibrated for being ruptured once a predetermined level of energy due to an impact is reached on the inner surface (4.1) of the outer FTAC (4). The frangible line may be a v-shaped groove scratched on the inner surface (4.1) of the outer FTAC (4), as it can be seen on figure 2. The frangible line (5) may be zigzag shaped. Advantageously, the zigzag shape changes the load direction abruptly and creates stress risers aiding in the cracking process. The frangible line (5) may define a closed region (6) within the inner surface (4.1) of the outer FTAC (4). This frangible line (5) defining a closed region (6) advantageously creates a high stress riser that crack upon an impact event and, once the cracks propagate, the outer FTAC (4) plasticly deforms and therefore absorbs the impact energy.

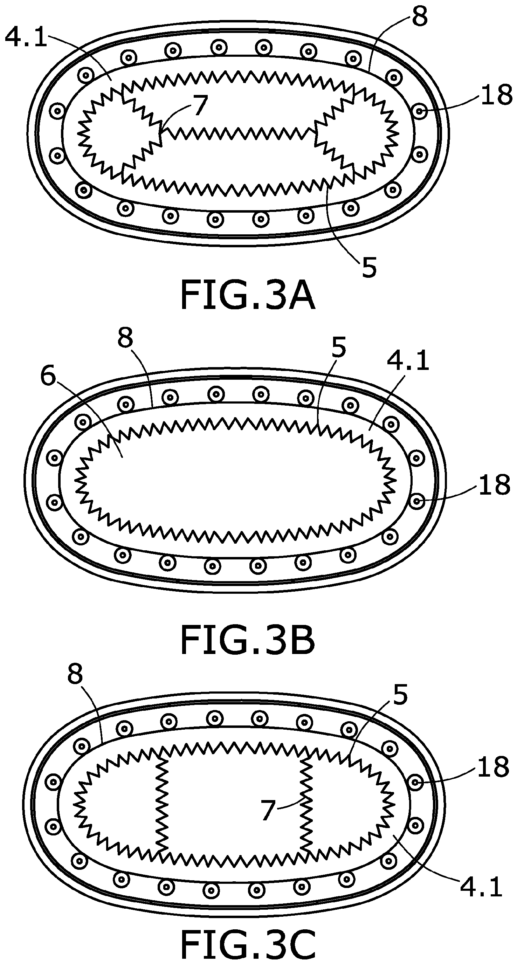

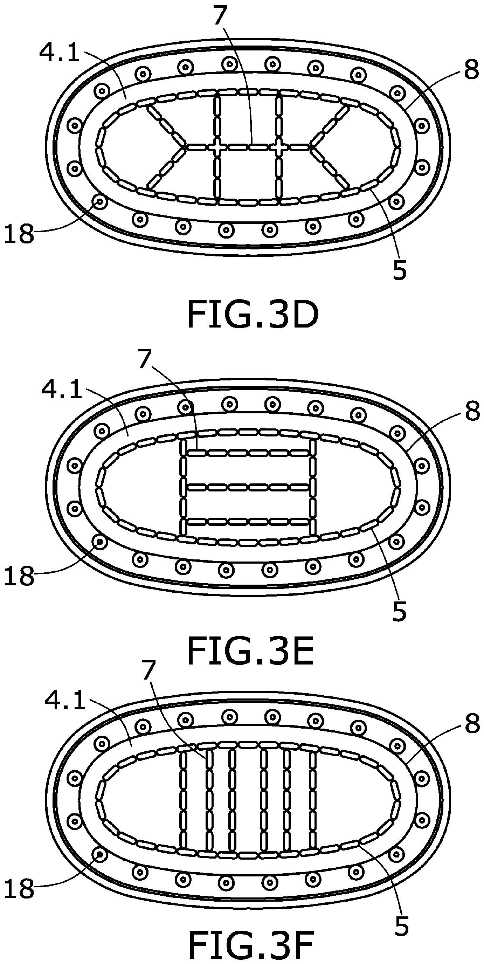

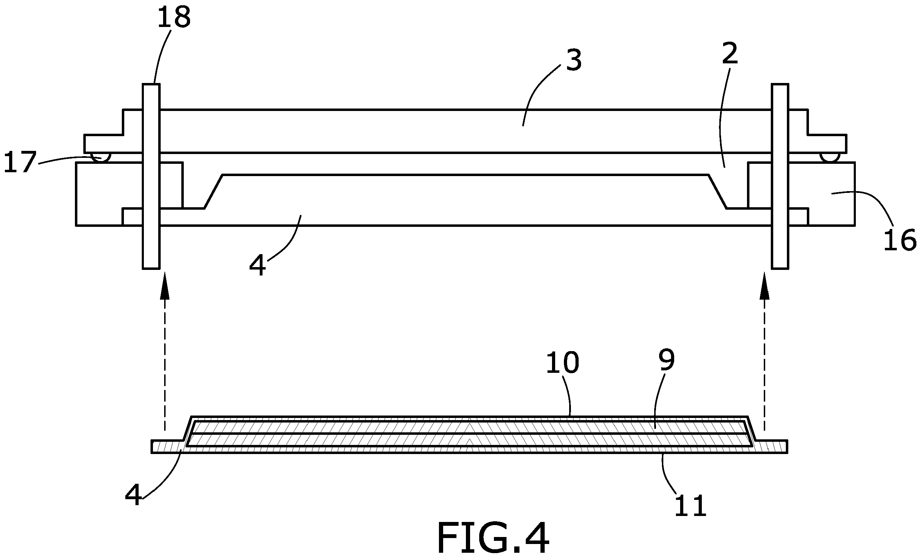

Another advantage provided is that deformable or crumble zones are created on the outer FTAC (4) so that it yields and plastically deforms. These deformation zones are created by the frangible line (5) and it is designed to break at certain energy ranges so that the outer FTAC (4) deforms and breaks in a controlled manner. The majority of the energy is absorbed by the outer FTAC (4) and advantageously it maintains sealing integrity of inner sealing of the outer FTAC (4). Advantageously, the amplitude of the propagation impact wave that is transferred to the inner FTAC (3) is also reduced, so that sealing integrity is fulfilled. The outer FTAC (4) may comprise at least an extra frangible line (7). The at least an extra frangible line (7) may be inside the closed region (6). The closed region (6) may be ellipse-shaped and zigzagged, and the at least one extra frangible line (7) may be zigzagged as it can be seen in figure 3A, 3B, 3C. The closed region (6) may be ellipse-shaped and stitched, and the at least one extra frangible line (7) may be stitched as it can be seen in figure 3D, 3E, 3F. The stitched feature of the frangible line must be understood as a succession of notches or small weakened areas having less thickness than the one of the outer FTAC (4). The outer FTAC (4) may comprise a stiffener ring means (8) on the inner surface (4.1). Advantageously having a closed region (6) and stiffener ring means (8) makes the crack be contained within the stiffener ring means (8). The stiffener means (8) may be a stiffener ring (8) surrounding all the frangible lines (5, 7) on the inner surface (4.1). The stiffener ring (8) is part of the inner surface (4.1) of the outer FTAC (4) located in the interior perimeter defined by the line of bolts (18). Advantageously, this stiffener ring (8) acts as a rip stop so the cracks do not propagate to the fasteners or bolts. Advantageously, the fuel sealing integrity is maintained since the clamping force between the inner FTAC (3) and the outer FTAC (4) is maintained. According to the invention the absorption means are the outer FTAC (4), and comprise a piece (9) made of foam sandwiched between two layers (10, 11) of aluminium, as shown in figure 4, even if not being scaled. The outer FTAC (4) is adapted for being fixed with the bolts (18) into the wing skin (16) in the aircraft. Advantageously, in the event of an impact, the outermost layer (11) receives the impact, the piece (9) of foam absorbs the main percentage of the impact, and the inner layer (10) provides rigidity to the whole structure. In one embodiment the foam is Rohacell^{®}. Advantageously this embodiment yields weight saving opportunities.

Advantageously, the solution having the two layers (10, 11) made of aluminium comprises the following advantages:
- no complex manufacturing,
- aerodynamic features, and.
- low weight

The solutions reduce the impact energy transferred to the outer FTAC (4) and surrounding wing skin (16). The reduction of impact energy is achieved by converting the kinetic energy of the impacting fragment, for instance a tire fragment, into work-energy and heat by plastically deforming the outer FTAC (4).

### Exemplary embodiment

A detailed structural analysis and testing have been performed testing the outer FTAC (4) of the invention which received the impact of an aircraft tire fragment. Various frangible lines (5) patterns, some of them shown in figures 3A, 3B, 3C, 3D, 3E, 3F, have been analysed using structural analysis software to determine the different energy absorption characteristics for each comparative example. In figure 4 an outer FTAC (4) is represented comprising a foam piece (9) between two layers (10, 11) of aluminium, the upper or inner layer (10) of aluminium being 2 mm thick and the lower or outermost layer (11) being 1mm thick.

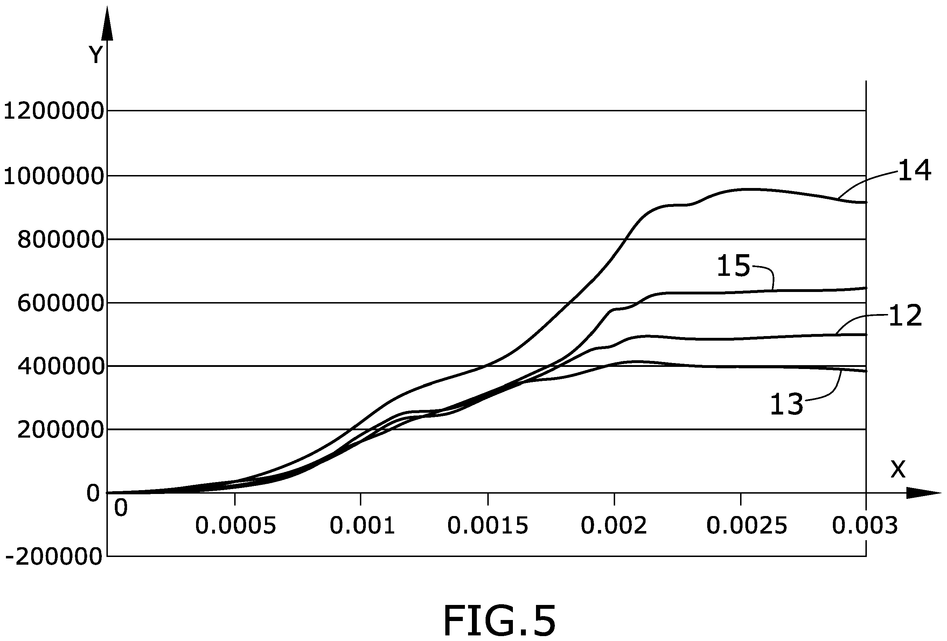

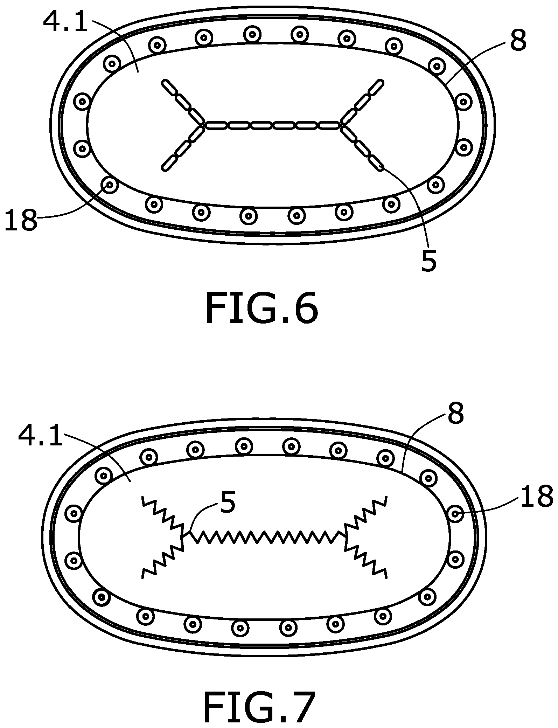

The embodiment of an outer FTAC (4) comprising a foam core (9) between the two layers of aluminium (10, 11) analytically shows the major absorbed impact energy. In figure 5 the absorbed impact energy, in joules (axis Y represents Energy in joules) per second (axis X represents time). The legend of such figure is as follows:
- (12): Absorbed tire impact energy by an outer FTAC comprising a zigzagged frangible line as shown in figure 7.
- (13): Absorbed tire impact energy by an outer FTAC (4) comprising a stitched frangible line (5) as shown in figure 6.
- (14): Absorbed tire impact energy by an outer FTAC (4) comprising a foam piece (9) between two layers (10, 11) of aluminium, as shown in figure 4.
- (15) Absorbed tire impact energy by an outer FTAC (4) comprising a frangible ellipse and zigzagged line (5) and a straight zigzagged frangible line (7), as shown in figure 3A.

The rising conclusions are:
- the zigzag pattern provides better results than the stitched pattern,
- the closed ellipse (5) also provides better results than having a single frangible line (7),
- the best performance is provided by a foam piece (9) between two layers (10, 11) of aluminium, as shown in figure 4.

## Claims

1. Outer fuel tank access cover (FTAC) (4) being adapted for being used to cover the outer opening of a void area (2) of a manhole arranged in a lower wing skin (16) of an aircraft for accessing the interior of the wing, which comprises a fuel tank (1),
the outer FTAC (4) comprising an inner surface (4.1), an outer surface (4.2) and a plurality of mounting holes peripherally distributed for fixing the outer FTAC (4) to the lower wing skin (16) such that, in a mounted state of the outer FTAC (4), the void area (2) is located between the outer FTAC (4) and an inner fuel tank access cover (3), which is in the fuel tank (1) and sealed with fuel seals (17) to the lower wing skin (16),
**characterised by**
absorption means adapted for absorbing an impact energy of an object impacting against the outer FTAC (4) and comprising
- two aluminium layers (10, 11) and
- at least one piece (9) made of foam sandwiched between said two layers (10,11).

2. Wing of an aircraft comprising at least one fuel tank access comprising an outer FTAC (4) according to claim 1.

3. Aircraft comprising a wing according to claim 2.

## Patentansprüche

1. Abdeckung für äußeren Treibstofftankzugang (FTAC) (4), welche zur Verwendung zum Abdecken der äußeren Öffnung eines Hohlraums (2) eines Mannlochs ausgelegt ist, welche in einer unteren Flügelhaut (16) eines Luftfahrzeugs für Zugang zu dem Inneren des Flügels angeordnet ist, welches einen Treibstofftank (1) umfasst,
wobei die äußere FTAC (4) eine Innenfläche (4.1), eine Außenfläche (4.2) und mehrere peripher verteilte Montagelöcher zum Befestigen der äußeren FTAC (4) an der unteren Flügelhaut (16) umfasst, so dass sich in einem montierten Zustand der äußeren FTAC (4) der Hohlraum (2) zwischen der äußeren FTAC (4) und einer inneren Treibstofftankabdeckung (3) befindet, welche sich in dem Treibstofftank (1) befindet und mit Treibstoffdichtungen (17) mit der unteren Flügelhaut (16) abgedichtet ist,
**gekennzeichnet durch**
Absorptionsmittel, die zum Absorbieren einer Aufprallenergie eines gegen die äußere FTAC (4) aufprallenden Objekts ausgelegt sind und umfassen:
- zwei Aluminiumschichten (10, 11) und
- mindestens ein aus Schaumstoff bestehendes Stück (9), welches sandwichartig zwischen die zwei Schichten (10, 11) gesetzt ist.

2. Flügel eines Luftfahrzeugs, welcher mindestens einen Treibstofftankzugang umfasst, welcher eine äußere FTAC (4) nach Anspruch 1 umfasst

3. Luftfahrzeug mit einem Flügel nach Anspruch 2.

## Revendications

1. Couvercle d'accès de réservoir de carburant extérieur (FTAC) (4) adapté pour être utilisé pour recouvrir l'ouverture extérieure d'une zone de vide (2) d'un trou d'homme agencé dans un revêtement d'aile inférieure (16) d'un avion pour accéder à l'intérieur de l'aile, qui comprend un réservoir de carburant (1),
le FTAC extérieur (4) comprenant une surface intérieure (4.1), une surface extérieure (4.2) et une pluralité de trous de montage répartis de manière périphérique pour fixer le FTAC extérieur (4) au revêtement d'aile inférieure (16) de telle sorte que, dans un état monté du FTAC extérieur (4), la zone de vide (2) est située entre le FTAC extérieur (4) et un couvercle d'accès de réservoir de carburant intérieur (3), qui se situe dans le réservoir de carburant (1) et scellé avec des joints à carburant (17) au revêtement d'aile inférieure (16),
**caractérisé par**
des moyens d'absorption adaptés pour absorber une énergie d'impact d'un objet entrant en collision avec le FTAC extérieur (4) et comprenant
- deux couches d'aluminium (10, 11) et
- au moins une pièce (9) fabriquée en mousse prise en sandwich entre lesdites deux couches (10, 11).

2. Aile d'un avion comprenant au moins un accès de réservoir de carburant comprenant un FTAC extérieur (4) selon la revendication 1.

3. Avion comprenant une aile selon la revendication 2.
